# FASCICULE DE BREVET EUROPEEN

(11) **EP 4 209 400 B1**
(45) Date de publication et mention de la délivrance du brevet: **19.11.2025**
(21) Numéro de dépôt: 23150781.5
(22) Date de dépôt: 09.01.2023
(51) Int. Cl.: B60W 50/00, B60W 50/04, B60R 16/037, B60W 50/08, B60K 35/00, B60W 30/182, B60W 40/09, B60W 50/14

(54) **PROCÉDÉ D'ADAPTATION AUTOMATIQUE D'AU MOINS UN PARAMÈTRE DE PERSONNALISATION D'UN VÉHICULE AUTOMOBILE**
VERFAHREN ZUR AUTOMATISCHEN ANPASSUNG MINDESTENS EINES PERSONALISIERUNGSPARAMETERS EINES KRAFTFAHRZEUGS
METHOD FOR AUTOMATICALLY ADAPTING AT LEAST ONE PERSONALIZATION PARAMETER OF A MOTOR VEHICLE

(30) Priorité: 10.01.2022 FR 2200162
(43) Date de publication de la demande: 12.07.2023
(73) Titulaire: Ampere SAS, 92100 Boulogne-Billancourt (FR)
(72) Inventeur: ABBINK, David, 2628CD Delft (NL); BECKERS, Niek, 2628 CD Delft (NL); MELMAN, Timo, 1082 RN Amsterdam (NL); MOUTON, Xavier, 78280 Gyuancourt (FR)
(74) Mandataire: Renault Group

(56) Documents cités:
- EP-A1- 3 348 964
- EP-A1- 3 693 243
- WO-A1-2021/013402
- DE-A1- 102011 117 025
- DE-A1- 102018 208 431
- DE-A1- 102020 107 536

## Description

L'invention concerne un procédé d'adaptation automatique d'au moins un paramètre de personnalisation de l'ambiance sonore et lumineuse, de la posture, du confort et de la performance d'un véhicule automobile.

Dans le domaine de l'automobile, une problématique générale est de chercher à améliorer la personnalisation du véhicule automobile au conducteur, et de proposer une automatisation de cette personnalisation.

Ce type de personnalisation peut aller de l'installation du conducteur au poste de conduite lors de l'accueil du conducteur dans sa voiture (par exemple le réglage électrique du siège ou la reconnaissance du profil de l'utilisateur), jusqu'à l'adaptation en roulage des réglages des systèmes d'ambiance (IHM et posture) et de dynamique automobile (moteur, châssis).

Plusieurs modes de conduite sont fréquemment proposées à un conducteur, tel qu'un mode Normal, un mode Sport ou un mode *Eco* (qui minimise la consommation énergétique du véhicule). Chaque mode appliquant au véhicule des paramètres de conduite différents, notamment des paramètres de performance du moteur et de rapports de vitesse, afin, par exemple, de s'adapter aux attentes du conducteur de conduite dynamique.

Les conducteurs peuvent changer de mode de conduite en appuyant généralement sur un bouton ou toute autre commande d'interface homme-machine, par exemple pour sélectionner le mode sport afin d'augmenter la puissance du moteur pour une conduite sportive ou pour sélectionner le mode éco pour une conduite plus économe en carburant.

Toutefois, on remarque que les usagers font relativement peu usage de ces modes de conduite car leur effet n'est pas toujours pleinement connu des utilisateurs. Ceci a pour effet de sous-utiliser les avantages potentiels de la personnalisation des paramètres du véhicule en fonction de leurs préférences de conduite.

Des systèmes auto-adaptatifs ont été développés pour estimer les réglages de performances du véhicule sur la base de données de comportement du conducteur du véhicule automobile.

On connait notamment le brevet DE102018208431A1 qui divulgue un procédé de prédiction d'un réglage fonctionnel d'un composant de véhicule automobile en fonction de données d'utilisation enregistrées pendant au moins une partie du trajet. Un procédé d'apprentissage automatique est exploité par un dispositif de prédiction pour procéder au réglage fonctionnel de manière automatique. D'autres éléments de l'art antérieur sont connus de EP 3 348 964 A1, DE 10 2011 117025 A1 et DE 10 2020 107536 A1.

La principale limite de l'utilisation de données comportementales récentes pour sélectionner les paramètres du véhicule est qu'en ne considérant que le passé, un changement de mode de conduite arrive généralement trop tard pour être approprié à un conducteur compte tenu de la route ou de la situation du trafic.

Le décalage temporel et géographique qui en résulte entre les besoins estimés et les besoins réels du conducteur entraîne une diminution de l'acceptation par le conducteur, ce qui signifie que le potentiel des modes de conduite restera sous-utilisé.

Cette situation est exacerbée par le fait que les systèmes actuels ne sont pas en mesure de tirer des enseignements du comportement en cours du conducteur afin d'améliorer les adaptations automatiques des besoins spécifiques dans l'usage des modes de conduite.

Aussi, il existe le besoin d'une solution pour améliorer l'adaptation automatique d'au moins un paramètre de réglage de la personnalisation d'un véhicule automobile.

A cet effet on propose un procédé d'adaptation automatique d'au moins un paramètre de personnalisation d'un véhicule automobile selon la revendication 1.

Ainsi on peut adapter automatiquement un paramètre de personnalisation du véhicule automobile en anticipant le besoin de l'utilisateur par la connaissance des paramètres dynamiques, à partir de la cartographie, à partir ou en fonction d'informations transmises d'une pluralité d'autres véhicules ayant emprunté la même route antérieurement.

Aussi, on peut améliorer encore plus la personnalisation du procédé en classifiant le conducteur selon un type de profil, de sorte à acquérir des données dynamiques antérieures correspondant à des profils similaires à ce conducteur de sorte à anticiper plus précisément sa conduite à venir.

On peut entendre par position future du véhicule toute position future, en fonction du sens de direction du véhicule et des données cartographiques, avec une distance d'anticipation fonction de la vitesse du véhicule automobile.

Dans une mise en œuvre, l'anticipation s'effectue pour les 30 secondes à venir, ce qui se traduit par une distance d'anticipation par exemple comprise entre 500m et 3000m, par exemple 2000 m, en fonction de la vitesse actuelle et prévue du véhicule.

La position future peut selon une alternative être déterminée en fonction de la vitesse du véhicule automobile. Ainsi, on peut à titre d'exemple considérer les positions qui pourront être atteintes par exemple dans une plage de 1 seconde à 30 secondes suivantes.

En particulier, ledit au moins un paramètre de personnalisation comprend une valeur de puissance disponible du véhicule automobile.

En particulier, ledit au moins un paramètre dynamique d'une pluralité d'autres véhicules automobiles comprend au moins un paramètre parmi : une accélération longitudinale, une accélération latérale, une accélération verticale, une vitesse, ou une combinaison d'au moins deux de ces paramètres précédents.

En particulier ledit au moins un paramètre dynamique d'une pluralité d'autres véhicules automobiles comprend au moins un paramètre parmi un réglage d'ambiance lumineuse, un réglage d'ambiance sonore ou un réglage de posture du conducteur,

Par exemple, ledit au moins un paramètre dynamique d'une pluralité d'autres véhicules automobiles comprend au moins un paramètre parmi une posture de cockpit, un son diffusé dans l'habitacle, une couleur d'éclairage de l'habitacle ou de l'extérieur du véhicule, un réglage de suspension.

Bien que la mise en œuvre principale de l'invention soit basée sur la dynamique longitudinale du véhicule, il est également possible que le procédé puisse être mis en œuvre pour la dynamique latérale et verticale du véhicule automobile en utilisant des paramètres de performance représentatifs des dimensions respectives.

Avantageusement et de manière non limitative, ledit au moins un paramètre dynamique est le produit entre la vitesse et l'accélération sur une distance prédéterminée à partie de la position actuelle du véhicule automobile. Ainsi on peut obtenir un paramètre relativement pertinent représentatif d'un appel de puissance.

On peut notamment acquérir soit un paramètre dynamique par autre véhicule et pour chaque position, ce qui a pour effet d'augmenter la quantité de données transmises, où bien acquérir une valeur moyenne ou une distribution de paramètres dynamiques précalculés de sorte à réduire la quantité de données reçue. On verra plus loin dans la description que ces paramètres pourront être en outre être regroupés par exemple type de conduite (sportive, normale, « eco » par exemple) afin d'obtenir des valeurs discriminées en fonction du type de conduite du conducteur pour lequel on souhaite anticiper les paramètres de conduite.

En d'autres termes, si le paramètre dynamique stocké dans la base de données pour chaque position de cartographie est une donnée adaptée de puissance (par exemple une valeur du produit accélération*vitesse), pour une pluralité de véhicules automobiles, ou sous forme de valeur moyenne ou de distribution. On stocke sur chaque point de la carte routière une valeur moyenne de la donnée de puissance généralement demandée par les conducteurs, et on peut par conséquent anticiper les besoins d'un conducteur sur une période à venir, par exemple entre 1 seconde et 30 secondes par exemple pour les 10 secondes à venir, en parcourant les positions futures sur la carte en fonction de sa géolocalisation.

Avantageusement et de manière non limitative, le procédé comprend en outre une étape de stockage des paramètres dynamiques du véhicule automobile en chaque endroit de positionnement sur la cartographie routière, de sorte que lors d'un passage ultérieur, ladite étape d'acquisition acquiert aussi ces paramètres dynamiques antérieurs du véhicule automobile, au même endroit de la cartographie routière. Ainsi, on peut anticiper les paramètres de performance du véhicule automobile en fonction des données dynamiques antérieures du même conducteur.

Avantageusement et de manière non limitative, l'étape d'adaptation comprend une boucle de rétroaction, par exemple mais de manière non limitative une boucle à rétroaction négative, au cours de laquelle on met en œuvre :
- une étape de réception de données d'action du conducteur du véhicule automobile ;
- une étape de comparaison des actions avec ledit au moins un paramètre de personnalisation adapté calculés à l'étape de calcul, L'étape de commande étant fonction de ladite comparaison réalisée au cours de l'étape de comparaison.

Ceci permet au procédé d'améliorer la précision de l'anticipation en tenant compte des intentions du conducteur, et de ne pas aller à l'encontre de sa demande ou de sa sécurité, mais uniquement de soutenir sa conduite.

L'invention concerne aussi un dispositif, tel qu'un calculateur embarqué, d'adaptation automatique d'au moins un paramètre de personnalisation d'un véhicule automobile selon la revendication 8.

L'ensemble des moyens mis en œuvre par le dispositif, tel que les moyens de positionnement, d'acquisition, de calcul ou de commande peuvent être un calculateur embarqué, un processeur, un cœur de processeur, ou tout autre dispositif de calcul numérique.

Par ailleurs ce dispositif comprend en particulier une mémoire vive pour stocker des données temporaires.

Ce dispositif peut en outre comprendre une mémoire de stockage pour stocker tout ou partie de ladite cartographie routière et/ou tout ou partie de la base de données d'au moins un paramètre dynamique d'une pluralité d'autres véhicules automobiles.

Le dispositif peut aussi comprendre des moyens de télécommunication, tel que des moyens cellulaires, GSM, satellitaires, ou tout autre moyen adaptés pour communiquer avec un serveur distant, par exemple pour acquérir tout ou partie de ladite cartographie routière et/ou tout ou partie de la base de données d'au moins un paramètre dynamique d'une pluralité d'autres véhicules automobiles, et pour transmettre aussi les données dynamiques du véhicule automobile ainsi que les données d'accélération positive relative éventuellement calculées.

L'invention concerne aussi un véhicule automobile comprenant un dispositif tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

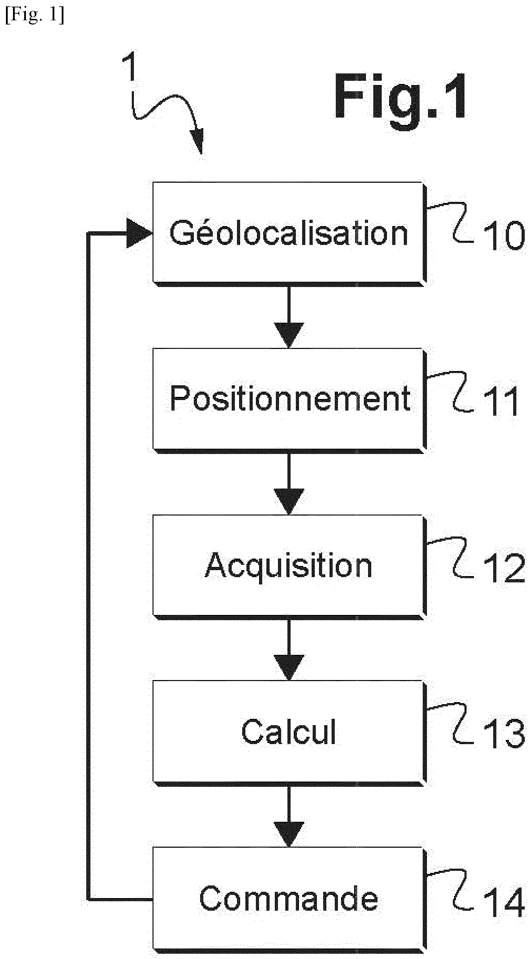

[Fig. 1] est une vue schématique d'un premier mode de réalisation de l'invention ;
[Fig. 2] est une vue schématique d'un deuxième mode de réalisation de l'invention ; et
[Fig. 3] est une vue fonctionnelle d'un exemple de réalisation du procédé selon l'invention.

Un véhicule automobile comprend un calculateur embarqué adapté pour modifier au moins un paramètre de personnalisation d'un véhicule automobile, tel qu'un paramétrage de puissance du moteur.

Ce calculateur embarqué, qui est assimilé au sens de l'invention à un type particulier d'ordinateur, met en œuvre un procédé 1 d'adaptation automatique du paramètre de personnalisation.

Ce procédé 1 selon le premier mode de réalisation de l'invention met en œuvre une boucle dite proactive.

On entend par le terme de boucle un ensemble d'étapes du procédé.

La boucle proactive prédit les réglages souhaités du véhicule et adapte le paramètre de personnalisation du véhicule avant que le conducteur ne soit censé prendre conscience de ce besoin.

A cet effet le procédé met en œuvre tout d'abord une étape de géolocalisation (10) du véhicule automobile.

Le véhicule automobile comprend notamment un GPS, ou tout autre dispositif de géolocalisation, permettant d'obtenir des coordonnées du véhicule automobile sur le globe terrestre. Ce dispositif de géolocalisation est adapté pour communiquer au calculateur mettant en œuvre le procédé les données de géolocalisation, soit à la demande, soit en les émettant au calculateur à intervalle réguliers.

Ensuite on procède à une étape de positionnement du véhicule automobile sur une cartographie routière en fonction de ladite géolocalisation.

A cette fin une cartographie routière est stockée dans une mémoire du véhicule automobile, laquelle peut être lue par le calculateur.

Cette cartographie est dans ce mode de réalisation stockée dans une mémoire de masse, mais elle peut de manière alternative être acquise en fonction du besoin via un réseau de télécommunication sur un serveur distant.

Ainsi, on met en concordance la position de géolocalisation avec la cartographie routière de sorte à positionner le véhicule automobile sur une route. Cette étape de positionnement peut en outre permettre de déterminer la direction du véhicule automobile sur la route lorsqu'on possède plusieurs positions de géolocalisation successives du véhicule automobile.

Une fois le véhicule positionné sur la cartographie routière, on procède alors à une étape d'acquisition 12 dans une base de données d'au moins un paramètre dynamique d'une pluralité d'autres véhicules automobiles en une même position du véhicule automobile sur la cartographie routière.

La base de données stocke ainsi une pluralité de paramètres dynamiques de véhicules ayant emprunté la même « route » sur la cartographie routière, qu'il s'agisse d'autres véhicules ou du véhicule automobile mettant en œuvre le procédé lors d'un passage antérieur.

Cette étape est réalisée dans ce mode de réalisation en acquérant les données d'une base de données stockée dans une mémoire du véhicule automobile.

Mais selon un mode de réalisation alternatif cette base de données peut être accédée à distance, par exemple via un serveur distant connecté par un réseau de télécommunication.

Dans ce mode de réalisation les paramètres dynamiques sont calculés comme étant le produit entre la vitesse et l'accélération, qui est un indicateur pertinent de l'appel de puissance opéré par le conducteur.

Les paramètres dynamiques peuvent toutefois comprendre des données de vitesse, des données d'accélération longitudinales des autres véhicules automobiles, les ambiances lumineuses ou sonore, les postures de conduite, les réglages des suspensions, ou du véhicule automobile lors de passages antérieurs.

Mais ils peuvent comprendre aussi, seuls ou en combinaison des données de vitesse instantanée, d'accélération latérales ou encore de posture de cockpit et d'agilité du châssis, en particulier dans le cadre de véhicules à quatre roues directrices.

Selon une mise en œuvre alternative on acquiert les paramètres dynamiques sous forme de valeur moyenne de tous les autres véhicules automobiles, ce qui permet en particulier de réduire la quantité de données stockée et/ou traitée par le procédé.

Partant de ces données, on procède alors en fonction de ces paramètres dynamiques acquis à l'étape de calcul 13 des paramètres de personnalisation en fonction desdites valeurs acquises desdits au moins unes valeurs de paramètres dynamiques acquis.

Au sens de l'invention, les paramètres de personnalisation sont des paramètres ayant un effet sur les performances de conduite du véhicule automobile ou sur le confort (en ce qui concerne notamment les ambiances lumineuses ou sonore, les postures de conduite, les réglages des suspensions)

Par analogie des paramètres de personnalisation sont les paramètres modifiés lors du passage du mode éco, au mode sport ou au mode sportif d'un véhicule automobile, chaque mode modifiant un ensemble de paramètres de personnalisation du véhicule automobile pour en modifier par exemple sa dynamique, sa puissance disponible, et son confort.

Notamment, le procédé 1 peut adapter les mêmes paramètres que ceux modifiés lors du changement d'un mode de conduite (économique généralement abrégé « éco », sport, normal) d'un véhicule automobile par sélection du conducteur.

Puis on procède à l'étape de commande 14 de l'application du paramètre de personnalisation adapté calculé à l'étape 13 au véhicule automobile.

Cette étape de commande 14 permet ainsi d'anticiper le comportement du conducteur du véhicule automobile par rapport à la connaissance du comportement d'autres conducteurs en un même endroit de la cartographie routière et de modifier les paramètres de conduite du véhicule en conséquence.

Ainsi, le procédé 1 met en œuvre une « boucle » proactive, autrement dit un ensemble d'étapes à action proactive, pour prédire les réglages de conduite souhaités du véhicule et adapter ces réglages du véhicule juste avant que le conducteur ne soit censé en ressentir le besoin, sur la base d'un procédé anticipatif qui utilise les données d'une base de données associant des paramètres de personnalisation de la conduite de conducteur à des emplacements géographiques.

Un deuxième mode de réalisation de l'invention est une évolution de ce premier mode de réalisation, mais vise à tenir compte en outre du comportement du conducteur.

En effet, dans le premier mode de réalisation le réglage des paramètres de personnalisation de la conduite est réalisé uniquement en fonction de la connaissance des comportements des autres conducteurs, et éventuellement du conducteur lui-même lors de trajets passés, stockés dans une base de données.

Or, ce procédé 1 peut être augmenté en tenant par ailleurs compte du comportement du conducteur automobile en cours de conduite.

Ainsi le procédé 1' du deuxième mode de réalisation met en œuvre les étapes du premier procédé 1 tout en intégrant en outre des étapes de commande par rétroaction, notamment négative.

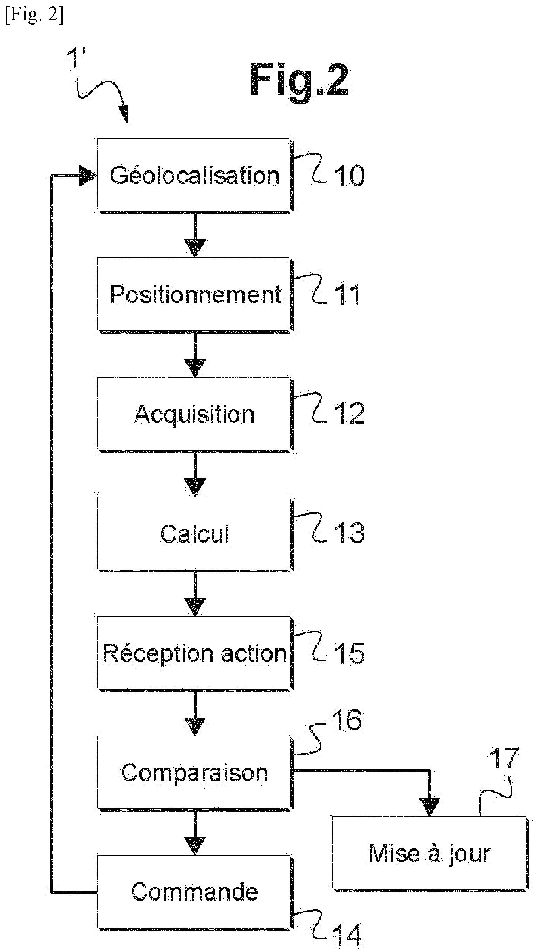

Le procédé 1', en référence à la figure 2, reçoit au cours d'une étape d'acquisition des données d'action du conducteur sur le véhicule automobile.

Ces données d'action sont par exemple une demande d'accélération ou de freinage, une accélération latérale, une action de passage de vitesse, un changement de posture de conduite, un changement d'ambiance lumineuse et sonore, une action sur la direction du véhicule automobile ou toute autre action modifiant le comportement du véhicule automobile.

De cette manière après avoir mis en œuvre les étapes de géolocalisation 10, de positionnement 11, et d'acquisition 12, on procède à l'étape de calcul de l'adaptation proactive 13 telle qu'elle est réalisée au cours du procédé 1, mais dans ce mode de réalisation l'adaptation n'est pas immédiatement mise en œuvre par l'étape de commande 14.

En effet, on reçoit au cours d'une étape de réception 15 les données d'actions du conducteur du véhicule automobile, puis on compare à l'étape de comparaison 16 ces actions reçues avec l'adaptation calculée à l'étape 13.

En fonction du résultat de la comparaison on met en œuvre alors une étape de commande 14 du paramètre de personnalisation en fonction des valeurs de paramètres de performances acquises à l'étape 12 et des valeurs reçues à l'étape 15 des actions du conducteur.

L'objectif de cette comparaison est de s'assurer que l'adaptation proactive n'aille pas à l'encontre des intentions ou de la sécurité du conducteur.

Les étapes 14 à 16 forment ainsi une boucle de rétroaction négative pour supprimer les désalignements entre la boucle proactive et le réglage du véhicule souhaité par le conducteur.

Les désalignements, autrement dit les incompatibilités entre l'action proactive et l'action réalisée par le conducteur, peuvent ici être supprimés immédiatement, soit implicitement en annulant la prédiction proactive si le comportement actuel du conducteur s'écarte suffisamment des entrées actuellement estimées, soit explicitement par le conducteur en appuyant sur un bouton de commande (par exemple, une sélection manuelle du mode, changement de posture, changement d'ambiance lumineuse ou sonore).

Ainsi, on peut supprimer les désalignements à long terme et améliorer les prédictions, le procédé met aussi en œuvre une étape de mise à jour 17 d'une base de donnée de comportement du conducteur et de paramètres de personnalisation, qui peut être soit la même base de données que pour les données de paramètres dynamiques des autres conducteurs, soit une autre base de données, par exemple stockée localement dans le véhicule automobile, mais pouvant aussi être stockée à distance, pour enregistrer le comportement de conduite anticipé dans la base de données avec les données de conduite individuelles du conducteur enregistré, spécifiques à l'emplacement, ce qui permet une adaptation personnalisée et plus spécifique des paramètre de personnalisation de la conduite, et apprend les paramètres de personnalisation de la conduite proactifs préférés de l'individu.

Une autre fonctionnalité du procédé selon l'invention pouvant être mise en œuvre avec en partant du deuxième mode de réalisation de l'invention ou de ses variantes, consiste à calculer une valeur représentative du type de conduite de l'utilisateur du véhicule automobile pour lui fournir une puissance moteur tenant aussi compte de son type de conduite habituelle.

A cet effet, on calcule un indicateur appelé accélération positive relative, connue en anglais sous l'abréviation de *Relative Positive Acceleration, RPA.* Cette valeur, connue de l'homme du métier, correspond à l'intégrale sur un intervalle de temps de la vitesse du véhicule multipliée par son accélération positive, divisé par la distance totale parcouru dans l'intervalle. Il s'agit ainsi d'un indicateur de la demande en puissance du conducteur dans le temps.

Ainsi dans un mode de réalisation particulier de l'invention, on calcule le RPA du conducteur, par exemple en tenant compte des valeurs dynamiques enregistrées tel qu'exposé précédemment.

Cette valeur RPA est ensuite utilisée au cours de l'étape d'acquisition 12, de sorte à discriminer les paramètres dynamiques acquis, pour n'acquérir que les paramètres associés à des enregistrements de conducteurs ayant un RPA similaire.

A cet effet des plages de valeurs de RPA pourront être prédéterminées, par exemple selon des critères habituels : conduite sportive (par exemple RPA élevé), conduite « normale » (par exemple RPA moyen) ou conduite « éco » (par exemple RPA faible).

Ces types de conduites classés par RPA (en tant que profil de conducteur) pourront aussi être différenciés en fonction des types de routes (Autoroute, route nationales, ville).

Le RPA peut aussi être calculé sur une durée courte, par exemple pour estimer la réactivité de la conduite du conducteur : nerveuse, calme) comme une durée longue, par exemple pour estimer l'esprit de conduite : tranquille, pressé.

De cette manière le calcul de paramètres de conduite proactif pourra être effectué en tenant compte en outre du type de conduite habituel du conducteur du véhicule automobile. Autrement dit la valeur de RPA calculée permet de déterminer un profil de conduite de l'utilisateur, correspondant à une plage de valeur de RPA.

Cette valeur de RPA pourra être mise à jour régulièrement par le procédé, par exemple lors de la mise à jour 17 de la base de données.

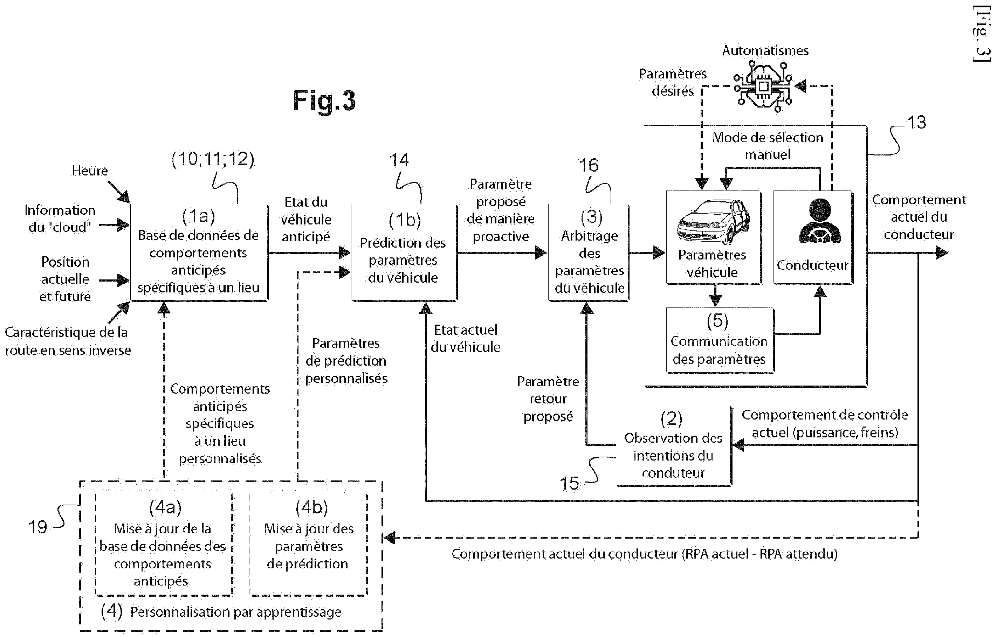

Une boucle de rétroaction, représentée sur le bloc 19 de la figure 3 peut être mise en œuvre pour adapter le RPA associé au conducteur prédit proactivement et appliqué comme outil de personnalisation à la puissance du moteur au RPA en cours mesuré lors de la conduite.

Les valeurs de RPA peuvent notamment être associées à des coordonnées géographiques pour l'utilisateur, à des moments de la journée ou tout autre critère pertinent.

Ainsi, on peut mettre en œuvre un module d'apprentissage automatique apte à déterminer un RPA attendu du conducteur, en fonction de sa position géographique et/ou des autres critères pertinents.

Le procédé selon l'un quelconque des modes de réalisation précédent peut en outre prendre en compte des paramètres externes, et peut discriminer les valeurs acquises à l'étape 12 en fonction de ces paramètres, tel que l'heure de la journée, des informations météorologiques, des informations relatives à l'état de la circulation, ou tout autre information externe pouvant influencer la dynamique de conduite et la personnalisation d'ambiance, de posture, de confort du véhicule automobile.

En référence à la figure 3, un mode de réalisation préféré de l'invention est exposé selon une approche par bloc fonctionnels.

La figure 3 est formée par cinq blocs interconnectés : {1a, 1b}, 2, 3, {4a, 4b} et 5 qui sont décrits ci-dessous. Bien que chaque bloc ait sa propre contribution, la performance globale du procédé selon l'invention repose sur l'interconnexion des blocs.

Sur la figure 3 chaque bloc est en outre associé aux étapes principales du procédé pour en améliorer la compréhension.

Le premier bloc {1a, 1b} comprend un module dit module prédictif de réglages des paramètres de personnalisation de la conduite du véhicule.

Ce module prédictif, qui correspond aux étapes 10-13 du procédé, propose de manière proactive un réglage des paramètres de personnalisation de la conduite du véhicule en utilisant une prédiction de décision basée sur le comportement anticipé du conducteur en fonction de l'emplacement, c'est-à-dire le comportement attendu du conducteur dans le futur compte tenu de l'emplacement, et le comportement actuel du conducteur.

A titre d'exemple, pendant la conduite, le module prédictif recherche quelques secondes, par exemple dans une fenêtre de prédiction comprise dans une plage allant de 1 seconde à 20 secondes, par exemple 10 secondes à l'avance le long de l'itinéraire dans la base de données avec le comportement de conduite spécifique au lieu.

Pour ce faire, le module prédictif examine l'itinéraire du conducteur sur une fenêtre temporelle de prédiction, par exemple, par le biais de son système de navigation ou tout autre moyen adapté pour estimer l'itinéraire le plus probable compte tenu de son comportement général, puis sélectionne un certain nombre d'emplacements GPS et extrait de la base de données le comportement de conduite correspondant à ces emplacements.

Le comportement dans la fenêtre de prédiction est sélectionné et utilisé pour déterminer le réglage de personnalisation du moteur et ou des rapports de vitesses.

Le bloc 1a correspond au comportement anticipé du conducteur en fonction de l'emplacement.

Ce comportement anticipé du conducteur spécifique à l'emplacement consiste en des variables comportementales et de choix de personnalisation du conducteur, telles que l'accélération longitudinale/latérale, la vitesse, l'accélérateur et l'action sur la direction, les choix d'ambiance lumineuse ou sonore, les choix de posture, liées à l'emplacement géographique. Le comportement anticipé du conducteur peut être basé sur des données historiques (mesures « a priori » du comportement du conducteur, similaires à des cartes thermiques ou à un moniteur de trafic routier).

Le comportement anticipé du conducteur peut également être prédit à l'aide de modèles numériques de comportement du conducteur et de paramètres routiers, par exemple, la courbure, le type, les informations sur le trafic prévu.

Le comportement anticipé du conducteur prend implicitement en compte le contexte, par exemple, la courbure, les panneaux d'arrêt, les ralentisseurs, l'environnement (la présence d'un foret, de la mer, d'une école d'un lieu de culte) contrairement à l'inférence explicite du contexte par les capteurs du véhicule. En effet, un panneau d'arrêt est par exemple implicitement reconnu par la décélération et l'accélération subséquente des conducteurs à son voisinage.

Le comportement anticipé du conducteur peut ainsi être personnalisé une fois que le conducteur commence à conduire avec le système ; le système enregistre et met à jour le comportement anticipé du conducteur en fonction de l'emplacement.

Dans cet exemple de mise en œuvre, les prédictions sont basées sur le comportement anticipé du conducteur en fonction du lieu, opérationnalisé par la vitesse * l'accélération positive moyennée sur une distance, obtenue par la géolocalisation, ici GPS, le long de l'itinéraire du conducteur ; ce qui constitue un critère équivalent à la demande d'énergie.

Nous supposons que nous avons accès à une base de données sur le comportement de conduite spécifique à un lieu :
- Soit le conducteur a déjà effectué le trajet auparavant et ses données ont été enregistrées et mises en correspondance avec les emplacements GPS,
- Soit nous disposons d'une base de données avec le comportement et le choix de paramètres de personnalisation d'autres conducteurs.

S'il n'y a pas de données disponibles pour les lieux souhaités, des modèles de comportement des conducteurs pourraient être utilisés pour faire des prédictions.

Outre les données relatives au comportement du conducteur, notamment l'utilisation des pédales d'accélération et de freinage, les changements de vitesse et l'utilisation du volant de direction, et des paramètres dynamiques du véhicule, tel que les accélérations longitudinale et latérale ou la vitesse du véhicule, nous enregistrons aussi les paramètres auto-sélectionnés, comme l'appui sur un bouton, les choix de posture de conduite, les choix d'ambiance lumineuse et sonore, et la distance parcourue.

Le stockage des données se fait en deux phases.

Premièrement, le comportement du conducteur en fonction du temps est stocké dans un tampon à 100 Hz. Ensuite, les données sont rééchantillonnées à un emplacement GPS et écrites dans une base de données.

Le comportement du conducteur nouvellement enregistré est pondéré par la moyenne des données déjà présentes dans la base de données (avec un poids moindre pour les nouvelles données).

En d'autres termes, la base de données est constituée de lignes de positions GPS et de colonnes de variables de comportement de conduite (vitesse, accélération, distance parcourue et accélérateur). S'il y a un nouvel emplacement GPS qui n'était pas encore dans la base de données, il sera ajouté à la base de données.

La mémoire de données ne stocke que les valeurs de vitesse et d'accélération données par l'emplacement, par conséquent, un ajustement plus précis du réglage du véhicule n'affectera pas la mémoire de données.

En effet, dans un mode préféré nous disposons de la vitesse et de l'accélération séparément pour calculer la puissance anticipée à bord.

De plus, l'accélération et la vitesse sont plus facilement disponibles pour des sources multiples.

Le bloc 1b correspond au prédicteur de réglage du véhicule, aussi appelés paramètres de conduite.

Le procédé d'adaptation proactive intègre le comportement anticipé et actuel du conducteur dans les réglages proposés pour le véhicule en utilisant une logique décisionnelle.

Enfin, en plus des informations contextuelles implicites découlant du comportement de conduite anticipé (bloc 1a), la comparaison entre le comportement anticipé et le comportement en cours prend implicitement en compte les éléments dynamiques de la route (par exemple, les feux de circulation, le trafic).

Par exemple, il est probable que le procédé d'adaptation proactive prédise un réglage plus sportif du moteur à proximité d'un feu de circulation, car en moyenne les conducteurs décélèrent puis accélèrent fortement (lorsque le feu de circulation est rouge).

Toutefois, si le feu est vert et qu'il y a un écart entre le comportement prédit (feu rouge ; une décélération suivie d'une accélération) et le comportement en cours du conducteur (feu vert ; vitesse constante), le réglage du véhicule donne la priorité au comportement actuel du conducteur, c'est-à-dire qu'il reste dans le réglage actuel du véhicule. Il n'y a donc pas de passage au réglage plus sportif du moteur.

Pendant la conduite, le procédé recherche quelques secondes à l'avance le long de l'itinéraire dans la base de données avec le comportement de conduite spécifique au lieu.

Pour ce faire, le procédé examine l'itinéraire du conducteur sur la fenêtre de prédiction (par exemple, par le biais de son système de navigation ou pour supposer l'itinéraire le plus probable compte tenu de son comportement général), sélectionne un certain nombre d'emplacements GPS et extrait de la base de données le comportement et les choix de personnalisation de conduite correspondant à ces emplacements.

Le comportement dans la fenêtre de prédiction est sélectionné et utilisé pour déterminer le réglage du moteur et les choix de personnalisation.

Si la valeur du paramètre dynamique, par exemple le produit vitesse*accélération, dans la fenêtre de prédiction dépasse un certain seuil, c'est-à-dire lorsqu'une forte demande de puissance est attendue, les paramètres du véhicule passent pour le moteur au réglage de la puissance moteur élevée voire pour la couleur des lumières d'ambiance, par exemple en couleur vive et dynamique.

Dans cet exemple, nous utilisons uniquement la vitesse*accélération (aussi écrite acc_pos, soit l'accélération pour la position donnée) étant donné l'emplacement comme signal de prédiction.

Pour la prédiction longitudinale, nous examinons la demande de puissance/énergie, qui est la force*vitesse, ou l'accélération*vitesse, où la masse du véhicule pourrait également être ajoutée. Le raisonnement derrière cela est que nous recherchons des endroits où les conducteurs ont besoin d'une forte demande de moteur. Pour ces endroits, nous changeons les paramètres du moteur pour un réglage plus « agressif », c'est-à-dire un accélérateur plus réactif et disponible, un changement de vitesse à des régimes plus élevés, etc.

Enfin, le système de prédiction de la mise en place du véhicule possède plusieurs paramètres de personnalisation réglables. En résumé, les paramètres de la politique sont les suivants :
- Le seuil de décision de l'adaptation du réglage de la personnalisation du véhicule, il s'agit d'un paramètre réglable particulièrement important tel qu'exposé ci-après.
- La taille de la fenêtre de prédiction. Il s'agit de la taille de la fenêtre de prédiction, c'est-à-dire de la durée pendant laquelle le système se projette dans l'avenir pour faire des prédictions de personnalisation appropriées. Il s'agit de la quantité de données anticipées sur le comportement du conducteur qui sont analysées et utilisées pour décider si et quand il faut changer les réglages de personnalisation, dont par exemple la réactivité de puissance du moteur. Une fenêtre de prédiction plus courte entraîne des changements de réglages de personnalisation plus courts et plus fréquents.
- La durée du changement de la personnalisation. Une fois qu'un changement de paramètre de personnalisation est réalisé, vers, par exemple, un réglage de puissance moteur élevée, cette durée détermine combien de temps le paramètre de personnalisation du véhicule doit rester dans ce réglage (par exemple plus dans un mode de puissance moteur plus « agressif ») avant de revenir automatiquement au réglage précèdent le changement (par exemple un paramètre de faible puissance moteur).
- Le temps de commutation minimal. Il s'agit du temps qui doit être présent au minimum entre deux changements de réglage de personnalisation consécutifs. Si deux commutations prévues se situent dans ce délai, l'algorithme maintient le réglage de personnalisation actuel. Cette vérification empêche le système de commuter trop souvent.

Concernant le réglage du seuil de décision de l'adaptation du réglage de personnalisation du véhicule, et à titre d'exemple, un seuil de décision a été mis en œuvre sous forme de logique basée sur des règles pour passer du mode éco au mode sport (mais peut être généralisé aux passages entre d'autres modes de conduite). Ainsi, dans cet exemple particulier, le réglage consiste en le changement de paramètre de personnalisation entre les modes de conduite préréglé (eco, sport, normal).

Pour prédire, par exemple, l'appel de puissance anticipé, autrement dit l'appel de puissance dans le futur immédiat de l'itinéraire devant le véhicule, le procédé se base sur le comportement du conducteur spécifique au lieu observé en cours.

Au sens de l'invention on entend par conducteur le conducteur actuel du véhicule automobile et ce dernier peut être préalablement identifié dans une étape dédiée au moyen d'un procédé connu.

Ceci permet notamment de personnaliser le véhicule au conducteur actuel, notamment en cas de véhicule partagé en plusieurs conducteurs différents.

Ici le paramètre de prédiction utilisé pour l'appel de puissance anticipé est le paramètre dynamique dans la fenêtre de prédiction, intégrée sur la fenêtre et normalisée par la distance parcourue dans la fenêtre. Cette mesure est également appelée accélération positive relative, *RPA.* La *RPA* est également corrélée à la consommation de carburant et au comportement de conduite.

Toutefois, d'autres paramètres de prédiction fonction de l'emplacement GPS puissent être utilisés, par exemple, la puissance délivrée par le véhicule directement, l'accélération, les secousses ou des combinaisons de ces paramètres de prédiction, les ambiances sonores et lumineuses, les postures, les choix de confort des suspensions.

La logique de décision pour l'adaptation des réglages des paramètres de personnalisation du véhicule est une décision basée sur un seuil dans l'exemple du réglage de personnalisation de la puissance du moteur. Lorsque le paramètre de décision atteint et dépasse un seuil, cela indique une période de forte demande de puissance, et les réglages du véhicule sont adaptés en conséquence. L'observation de ce seuil est aussi utilisée pour décider de changer de posture, d'amplifier la luminosité ou par exemple de renforcer le son d'ambiance sonore.

La magnitude du seuil a une influence directe sur la durée et la fréquence des changements des paramètres de personnalisation de la conduite, ce que nous illustrerons à l'aide de deux exemples représentatifs (un seuil élevé et un seuil bas).

Tout d'abord, un seuil élevé entraînera des adaptations moins nombreuses et plus courtes du réglage du véhicule, par exemple, pour la personnalisation du moteur, à une puissance élevée.

Un seuil bas se traduira par des périodes plus fréquentes et plus longues de passage des paramètres de personnalisation de la conduite pour par exemple le moteur avec une personnalisation de plus haute puissance.

L'amplitude du seuil a aussi une incidence directe sur la fréquence et la durée des changements de réglages du véhicule.

Étant donné les différences de préférences de conduite entre les conducteurs, le seuil peut et doit être adapté à chaque conducteur. On peut aussi considérer que plusieurs seuils seront proposés en fonction des types de personnalisation que l'on cherche à réaliser : seuil pour les ambiances, seuils pour les postures, etc.

Tout seuil peut être adapté sur la base d'interactions explicites du conducteur (y compris l'augmentation ou la diminution manuelle du seuil par le conducteur, ou la sélection dans une liste de seuils prédéfinis) ou par l'adaptation implicite du seuil sur la base du comportement du conducteur.

Dans ce dernier cas, les seuils peuvent être adaptés en fonction du comportement de conduite ; si le comportement du conducteur ressemble à une conduite sportive, le seuil peut être automatiquement abaissé. Si le comportement ressemble à celui d'un conducteur plus conservateur (peu de changements de vitesse, par exemple), les seuils peuvent être augmentés.

Le bloc 2 représente un module de réduction immédiate des désalignements grâce à un détecteur d'intention réactif.

Le détecteur d'intention réactive sert d'entrée pour l'arbitrage du réglage des paramètres de personnalisation du véhicule et aide à éliminer les désalignements immédiats entre le réglage proposé prédit du véhicule et l'intention en cours observée du conducteur.

Le réglage réactif du véhicule est calculé à l'aide d'une logique de décision basée sur le comportement actuel du conducteur (y compris l'utilisation des pédales, le changement de vitesse et l'utilisation du volant, les changements d'ambiance sonore et lumineuse, les changements de posture, les réglages de suspension) et l'état du véhicule (c'est-à-dire les accélérations longitudinales et latérales ou la vitesse du véhicule).

Le bloc 3 quant à lui représente l'arbitrage des paramètres du véhicule.

L'arbitrage de la configuration du véhicule consiste en un calcul de prédiction qui décide de la configuration de personnalisation finale du véhicule en tenant compte de la configuration de personnalisation proposée par le procédé d'adaptation proactive et de la configuration réactive du véhicule.

L'arbitrage du réglage du véhicule compare, tel qu'à l'étape 16 du procédé, l'intention prédite du conducteur avec l'intention en cours observée du conducteur et sélectionne le réglage du véhicule qui soutient le mieux le comportement du conducteur.

Enfin, le cas échéant, la demande de réglage manuel du conducteur sera toujours prioritaire, ce qui permettra au conducteur de passer outre le système s'il le souhaite.

Le bloc 4 représente la minimisation des désalignements à long terme de la personnalisation.

Alors que le détecteur d'intention réactif vise à éliminer les désalignements immédiats entre l'intention du conducteur et les paramètres prédits de manière proactive, la manière dont la personnalisation vise à tirer des enseignements de ces désalignements des paramètres de personnalisation afin d'améliorer les prédictions à l'avenir et d'éviter que le même désalignement ne se répète. En outre, la correction de la personnalisation est essentielle pour rendre les prédictions prévisibles pour un conducteur individuel. La correction de la personnalisation comporte deux éléments :
Selon le bloc 4a, on apprend le comportement des choix de personnalisation anticipé du conducteur. Le comportement des choix anticipé de personnalisation du conducteur est mis à jour avec le comportement en cours enregistré. Ce processus d'apprentissage est généralement à long terme. Plus un itinéraire est parcouru, plus le comportement de choix de personnalisation anticipé du conducteur, spécifique au lieu, devient pertinent.

Le bloc 4b représente l'apprentissage des paramètres de personnalisation personnalisés de prédiction proactive, aussi appelés paramètres de personnalisation de la conduite.

Les paramètres de personnalisation proactifs préférés sont appris à l'aide du comportement observé du conducteur et d'une demande explicite du conducteur (comme un changement de mode manuel à l'aide d'un bouton, changement d'une ambiance lumineuse, d'une posture).

La logique de décision peut tirer des leçons des désalignements entre ses propres prédictions de choix de personnalisation et le comportement (de conduite et/ou de choix de personnalisation) en cours observé du conducteur en mettant à jour les paramètres de la prédiction proactive.

Il est relativement important que la logique de décision conduise à des décisions prévisibles de choix de personnalisation pour le conducteur afin d'éviter la désaffectation (cad le choix de nouveaux réglages de personnalisation qui viendrait remplacer les réglages en cours) ; en particulier si l'adaptation prédictive ne s'adapte pas à une situation répétable, le conducteur peut ne pas accepter les réglages en cours des système de personnalisation dont est équipé le véhicule.

Lorsqu'une adaptation proactive est finalement commandée selon l'étape 14, on peut aussi procéder comme l'expose le bloc 5 à une communication de l'intention du système dont le réglage a évolué (par exemple en expliquant la raison du changement de réglage du cockpit) et de l'intention estimée du conducteur.

Les décisions doivent pouvoir être expliquées et être logiques pour le conducteur, d'où l'importance d'une communication adéquate du processus décisionnel pour améliorer la compréhension du fonctionnement du système par le conducteur et, par la suite, son acceptation.

Les intentions du système sont communiquées au conducteur par le son, la lumière et l'interface du tableau de bord.

La communication consiste par exemple en :
- La communication du changement de mode.
- La communication de l'intention de réglage calculée par le procédé
- La communication de l'intention estimée du conducteur par le procédé.
- La communication des désalignements observés et des ajustements appris.

Le procédé selon l'invention permet ainsi une adaptation proactive des paramètres de personnalisation du véhicule tel que le comportement longitudinal, latéral et vertical du véhicule, ainsi que les paramètres d'ambiance, de posture, etc.., aux besoins individuels et spécifiques au lieu du conducteur. Les principaux avantages de ce système sont les suivants :
- Le procédé selon l'invention décrit un processus holistique permettant d'adapter de manière proactive les réglages du véhicule en fonction du comportement du conducteur.

Ce comportement du conducteur est déterminé par le lieu de conduite, par exemple le comportement spécifique au lieu, ainsi que par le contexte de conduite, par exemple l'état de circulation. Les signaux sont donc spécifiques au lieu et peuvent inclure le comportement du conducteur ou l'état du véhicule, tel que sa puissance.

Les paramètres du véhicule sont modifiés de manière proactive avant que le conducteur n'en ressente le besoin, sur la base de prédictions. Ainsi, le véhicule est prêt pour que le conducteur puisse profiter directement des avantages du réglage adapté du véhicule en cas de besoin.

Ainsi, une fois l'itinéraire parcouru par le procédé dans le cadre de la recherche de réglage de paramètres de conduite proactif, la base de données sur le comportement anticipé du conducteur, spécifique à l'emplacement, est mise à jour avec le comportement du conducteur de l'individu enregistré.

Le comportement du conducteur nouvellement enregistré est pondéré en moyenne avec les données déjà présentes dans la base de données, en particulier avec moins de poids pour les nouvelles données.

Il en résulte automatiquement des prédictions plus personnalisées la prochaine fois que le conducteur empruntera le même itinéraire.

La combinaison de prédictions proactives, de détections d'intention réactives et d'apprentissage nous permet d'avoir des prédictions acceptées par le conducteur, car les désalignements à court et à long terme sont éliminés en donnant la priorité à l'intention actuelle du conducteur par rapport à l'intention prédite et en apprenant du comportement observé du conducteur.

Le système supprime les décalages immédiats entre l'intention prédite du conducteur et l'intention actuelle du conducteur en comparant les paramètres prédits du véhicule avec l'intention actuelle du conducteur ; autrement dit le procédé met en œuvre un observateur de l'intention réactive avec possibilité pour le conducteur de passer outre.

On peut ainsi personnaliser l'adaptation des réglages du véhicule par apprentissage du comportement individuel du conducteur et de ses préférences afin de minimiser les désalignements futurs et répétitifs.

Une communication appropriée permet en outre d'informer le conducteur et lever la confusion sur le réglage du véhicule.

Le procédé selon l'invention ne se contente pas de passer d'un mode de conduite statique prédéfini à un autre, mais permet également de régler les paramètres de conduite en fonction du conducteur. Les réglages du véhicule et les combinaisons de réglages du véhicule (c'est-à-dire différents réglages de la dynamique longitudinale et latérale du véhicule en fonction des préférences individuelles, les réglages d'ambiance lumineuse et sonore, les postures, ou de la situation routière) peuvent être adaptés dynamiquement pendant la conduite en fonction du comportement historique, actuel et anticipé du conducteur. Les réglages du véhicule peuvent s'adapter à une gamme continue de réglages et de combinaisons de réglages du véhicule.

Aucun autre capteur avancé d'aide à la conduite n'est nécessaire pour faire des prédictions fiables. Comme les prédictions sont basées sur le comportement du conducteur spécifique au lieu enregistré « a priori », notre approche réduit la dépendance vis-à-vis des modèles de comportement ou de trafic. Le procédé est ainsi capable de déduire implicitement des situations routières dynamiques, telles que le trafic et les feux de signalisation, à partir du comportement de conduite anticipé et actuel.

Le système ne s'appuie pas nécessairement sur une classification prédéfinie du style de conduite, des types de route prédéfinis ou des situations prédéfinies pour adapter les paramètres du véhicule. Il s'appuie directement sur le comportement individuel du conducteur, ce qui permet une adaptation personnalisée et plus ponctuelle des paramètres du véhicule.

En outre l'invention nécessite peu de paramètres de réglage, et peu de réglages sont nécessaires. Les résultats importants de la performance du système adaptatif proactif, tels que la fréquence, la durée, le moment et le lieu (position de début/fin) de l'adaptation des paramètres du véhicule, émergent automatiquement du comportement personnalisé du conducteur en fonction du lieu.

## Revendications

1. Procédé (1, 1') d'adaptation automatique d'au moins un paramètre de personnalisation, tel qu'un paramètre de personnalisation du moteur, du châssis, de l'ambiance lumineuse et sonore de l'habitacle, de posture du conducteur, d'un véhicule automobile, ledit procédé comprenant :
- Une étape de géolocalisation (10) dudit véhicule automobile ;
- Une étape de positionnement (11) du véhicule automobile sur une cartographie routière en fonction de ladite géolocalisation ;
- Une étape d'acquisition (12) dans une base de données d'au moins un paramètre dynamique d'une pluralité d'autres véhicules automobiles en une même position et/ou en des positions futures du véhicule automobile sur la cartographie routière ;
- Une étape de calcul (13) dudit au moins un paramètre de personnalisation adapté en fonction dudit au moins un paramètre dynamique acquis ; et
- Une étape de commande (14) de l'application du paramètre de personnalisation adapté au véhicule automobile ; **caractérisé en ce que** le procédé comprend en outre :
- Une étape de calcul d'une valeur représentative du type de conduite de l'utilisateur du véhicule automobile, tel qu'une valeur d'accélération positive relative sur une période prédéterminée ;
- La définition d'un profil de conduite de l'utilisateur fonction de ladite valeur représentative du type de conduite de l'utilisateur ; et
Au cours de l'étape d'acquisition (12) est acquise dans ladite base de données au moins un paramètre dynamique d'une pluralité d'autres véhicules automobiles présentant une même valeur représentative du type de conduite de l'utilisateur du véhicule automobile, calculée pour ledit véhicule automobile et pour les autres véhicules, en une même position du véhicule automobile sur la cartographie routière.

2. Procédé (1, 1') selon la revendication 1 **caractérisé en ce que** ledit au moins un paramètre de personnalisation comprend une valeur de puissance disponible du véhicule automobile.

3. Procédé (1, 1') selon la revendication 1 ou 2 **caractérisé en ce que** ledit au moins un paramètre dynamique d'une pluralité d'autres véhicules automobiles comprend au moins un paramètre parmi : une accélération longitudinale, une accélération latérale, une accélération verticale, une vitesse, ou une combinaison d'au moins deux de ces paramètres précédents.

4. Procédé (1, 1') selon l'une quelconque des revendications 1 à 3 **caractérisé en ce que** ledit au moins un paramètre dynamique d'une pluralité d'autres véhicules automobiles comprend au moins un paramètre parmi un réglage d'ambiance lumineuse, un réglage d'ambiance sonore ou un réglage de posture du conducteur,

5. Procédé (1, 1') selon la revendication 4 dans lequel ledit au moins un paramètre dynamique comprend le produit entre la vitesse et l'accélération sur une distance prédéterminée à partie de la position actuelle du véhicule automobile.

6. Procédé (1, 1') selon l'une quelconque des revendications 1 à 5 **caractérisé en ce qu'**il comprend en outre :
- Une étape de stockage des paramètres dynamiques du véhicule automobile en chaque endroit de positionnement sur la cartographie routière, de sorte que lors d'un passage ultérieur, ladite étape d'acquisition (12) acquiert aussi ces paramètres dynamiques antérieurs du véhicule automobile, au même endroit de la cartographie routière.

7. Procédé (1') selon l'une quelconque des revendications 1 à 6 **caractérisé en ce que** l'étape d'adaptation comprend une boucle de rétroaction négative au cours de laquelle on met en œuvre :
- une étape de réception de données d'action du conducteur du véhicule automobile ;
- une étape de comparaison des actions avec ledit au moins un paramètre de personnalisation adapté calculés à l'étape de calcul (13),
L'étape de commande (14) étant fonction de ladite comparaison réalisée au cours de l'étape de comparaison (16).

8. Dispositif d'adaptation automatique d'au moins un paramètre de personnalisation, tel qu'un paramètre de personnalisation du moteur, du châssis, de l'ambiance lumineuse et sonore de l'habitacle, de posture du conducteur, d'un véhicule automobile ledit dispositif comprenant :
- Des moyens de géolocalisation dudit véhicule automobile ;
- Des moyens de positionnement du véhicule automobile sur une cartographie routière en fonction de ladite géolocalisation ;
- Des moyens d'acquisition dans une base de données d'au moins un paramètre dynamique d'une pluralité d'autres véhicules automobiles en une même position et/ou en des positions futures du véhicule automobile sur la cartographie routière ;
- Des moyens de calcul d'une valeur représentative du type de conduite de l'utilisateur du véhicule automobile, tel qu'une valeur d'accélération positive relative sur une période prédéterminée ;
- Des moyens de définition d'un profil de conduite de l'utilisateur fonction de ladite valeur représentative du type de conduite de l'utilisateur ; et
- Des moyens de calcul dudit au moins un paramètre de personnalisation adapté en fonction dudit au moins un paramètre dynamique acquis ; et
- Des moyens de commande de l'application du paramètre de personnalisation adapté au véhicule automobile ;
Les moyens d'acquisition étant adaptés pour acquérir dans ladite base de données au moins un paramètre dynamique d'une pluralité d'autres véhicules automobiles présentant une même valeur représentative du type de conduite de l'utilisateur du véhicule automobile, calculée pour ledit véhicule automobile et pour les autres véhicules, en une même position du véhicule automobile sur la cartographie routière.

9. Véhicule automobile comprenant un dispositif selon la revendication 8.

## Patentansprüche

1. Verfahren (1, 1') zur automatischen Anpassung mindestens eines Personalisierungsparameters, wie beispielsweise eines Personalisierungsparameters für den Motor, das Fahrwerk, die Licht- und Klangstimmung im Innenraum oder die Sitzposition des Fahrers eines Kraftfahrzeugs, wobei das Verfahren Folgendes aufweist:
- einen Schritt zum Geolokalisieren (10) des Kraftfahrzeugs;
- einen Schritt zum Positionieren (11) des Kraftfahrzeugs auf einer Straßenkarte in Abhängigkeit von der Geolokalisierung;
- einen Schritt zum Erfassen (12) mindestens eines dynamischen Parameters einer Vielzahl anderer Kraftfahrzeuge an derselben Position und/oder an zukünftigen Positionen des Kraftfahrzeugs auf der Straßenkarte in einer Datenbank;
- einen Schritt zum Berechnen (13) des mindestens einen Personalisierungsparameters, der entsprechend dem mindestens einen erfassten dynamischen Parameter angepasst wird; und
- einen Schritt zum Steuern (14) der Anwendung des an das Kraftfahrzeug angepassten Personalisierungsparameters; **dadurch gekennzeichnet, dass** das Verfahren darüber hinaus Folgendes aufweist:
- einen Schritt zum Berechnen eines repräsentativen Werts für den Fahrstil des Benutzers des Kraftfahrzeugs, beispielsweise eines relativen positiven Beschleunigungswerts über einen vorbestimmten Zeitraum;
- die Definition eines Fahrprofils des Benutzers in Abhängigkeit von dem Wert, der für den Fahrstil des Benutzers repräsentativ ist; und
wobei während des Schritts zum Erfassen (12) in der Datenbank mindestens ein dynamischer Parameter einer Vielzahl anderer Kraftfahrzeuge erfasst wird, die denselben Wert aufweisen, der für den Fahrstil des Benutzers des Kraftfahrzeugs repräsentativ ist und für das Kraftfahrzeug und die anderen Fahrzeuge an derselben Position des Kraftfahrzeugs auf der Straßenkarte berechnet wurde.

2. Verfahren (1, 1') nach Anspruch 1 **dadurch gekennzeichnet, dass** der mindestens eine Personalisierungsparameter einen Wert für die verfügbare Leistung des Kraftfahrzeugs aufweist.

3. Verfahren (1, 1') nach Anspruch 1 oder 2, **dadurch gekennzeichnet, dass** der mindestens eine dynamische Parameter einer Vielzahl anderer Kraftfahrzeuge mindestens einen der folgenden Parameter aufweist: Längsbeschleunigung, Querbeschleunigung, Vertikalbeschleunigung, Geschwindigkeit oder eine Kombination aus mindestens zwei der vorgenannten Parameter.

4. Verfahren (1, 1') nach einem der Ansprüche 1 bis 3, **dadurch gekennzeichnet, dass** der mindestens eine dynamische Parameter einer Vielzahl anderer Kraftfahrzeuge mindestens einen Parameter aus einer Einstellung der Lichtstimmung, einer Einstellung der Klangstimmung oder einer Einstellung der Sitzposition des Fahrers aufweist.

5. Verfahren (1, 1') nach Anspruch 4, wobei der mindestens eine dynamische Parameter das Produkt aus Geschwindigkeit und Beschleunigung über eine vorbestimmte Strecke ab der aktuellen Position des Kraftfahrzeugs aufweist.

6. Verfahren (1, 1') nach einem der Ansprüche 1 bis 5, **dadurch gekennzeichnet, dass** es darüber hinaus Folgendes aufweist:
- einen Schritt zum Speichern der dynamischen Parameter des Kraftfahrzeugs an jedem Ort der Positionierung auf der Straßenkarte, so dass bei einer späteren Durchfahrt der Schritt zum Erfassen (12) auch diese früheren dynamischen Parameter des Kraftfahrzeugs am gleichen Ort der Straßenkarte erfasst.

7. Verfahren (1') nach einem der Ansprüche 1 bis 6 **dadurch gekennzeichnet, dass** der Anpassungsschritt eine negative Rückkopplungsschleife aufweist, in der Folgendes durchgeführt wird:
- ein Schritt zum Empfangen von Aktionsdaten des Fahrers des Kraftfahrzeugs;
- ein Schritt zum Vergleichen der Aktionen mit dem mindestens einen angepassten Personalisierungsparameter, der im Schritt zum Berechnen (13) berechnet wurde,
wobei der Schritt zum Steuern (14) von dem im Schritt zum Vergleichen (16) durchgeführten Vergleich abhängt.

8. Vorrichtung zur automatischen Anpassung mindestens eines Personalisierungsparameters, wie beispielsweise eines Personalisierungsparameters für den Motor, das Fahrwerk, die Licht- und Klangstimmung im Innenraum oder die Sitzposition des Fahrers eines Kraftfahrzeugs, wobei die Vorrichtung Folgendes aufweist:
- Mittel zum Geolokalisieren des Kraftfahrzeugs;
- Mittel zum Positionieren des Kraftfahrzeugs auf einer Straßenkarte in Abhängigkeit von der Geolokalisierung;
- Mittel zum Erfassen mindestens eines dynamischen Parameters einer Vielzahl anderer Kraftfahrzeuge an derselben Position und/oder an zukünftigen Positionen des Kraftfahrzeugs auf der Straßenkarte in einer Datenbank;
- Mittel zum Berechnen eines repräsentativen Werts für den Fahrstil des Benutzers des Kraftfahrzeugs, beispielsweise eines relativen positiven Beschleunigungswerts über einen vorbestimmten Zeitraum;
- Mittel zum Definieren eines Fahrprofils des Benutzers in Abhängigkeit von dem Wert, der für den Fahrstil des Benutzers repräsentativ ist; und
- Mittel zum Berechnen des mindestens einen Personalisierungsparameters, der entsprechend dem mindestens einen erfassten dynamischen Parameter angepasst wird; und
- Mittel zum Steuern der Anwendung des an das Kraftfahrzeug angepassten Personalisierungsparameters;
wobei die Mittel zum Erfassen dazu angepasst sind, in der Datenbank mindestens einen dynamischen Parameter einer Vielzahl anderer Kraftfahrzeuge zu erfassen, die denselben Wert aufweisen, der für den Fahrstil des Benutzers des Kraftfahrzeugs repräsentativ ist und für das Kraftfahrzeug und die anderen Fahrzeuge an derselben Position des Kraftfahrzeugs auf der Straßenkarte berechnet wurde.

9. Kraftfahrzeug, das eine Vorrichtung nach Anspruch 8 aufweist.

## Claims

1. Method (1, 1') for automatically adapting at least one personalization parameter of a motor vehicle, such as a parameter for personalization of the engine, of the chassis, of the lighting and sound ambiance of the passenger compartment, of driver posture, said method comprising:
- a step (10) of geolocating said motor vehicle;
- a step (11) of positioning the motor vehicle on a road map on the basis of said geolocation;
- a step (12) of acquiring, in a database, at least one dynamic parameter of a plurality of other motor vehicles in the same position and/or in future positions of the motor vehicle on the road map;
- a step (13) of calculating said at least one personalization parameter adapted on the basis of said at least one acquired dynamic parameter; and
- a step (14) of commanding the application of the personalization parameter adapted to the motor vehicle; **characterized in that** the method further comprises:
- a step of calculating a value representative of the type of driving of the user of the motor vehicle, such as a relative positive acceleration value over a predetermined period;
- the definition of a driving profile of the user based on said value representative of the type of driving of the user; and
acquired in said database during the acquisition step (12) is at least one dynamic parameter of a plurality of other motor vehicles having the same value representative of the type of driving of the user of the motor vehicle, calculated for said motor vehicle and for the other vehicles, in the same position of the motor vehicle on the road map.

2. Method (1, 1') according to Claim 1, **characterized in that** said at least one personalization parameter comprises an available power value of the motor vehicle.

3. Method (1, 1') according to Claim 1 or 2, **characterized in that** said at least one dynamic parameter of a plurality of other motor vehicles comprises at least one parameter amongst: longitudinal acceleration, lateral acceleration, vertical acceleration, speed, or a combination of at least two of these parameters above.

4. Method (1, 1') according to any one of Claims 1 to 3, **characterized in that** said at least one dynamic parameter of a plurality of other motor vehicles comprises at least one parameter amongst a light ambiance setting, a sound ambiance setting or a driver posture setting.

5. Method (1, 1') according to Claim 4, wherein said at least one dynamic parameter comprises the product of the speed and the acceleration over a predetermined distance from the current position of the motor vehicle.

6. Method (1, 1') according to any one of Claims 1 to 5, **characterized in that** it further comprises:
- a step of storing the dynamic parameters of the motor vehicle at each positioning location on the road map so that, during a subsequent passage, said acquisition step (12) also acquires these previous dynamic parameters of the motor vehicle, at the same location of the road map.

7. Method (1') according to any one of Claims 1 to 6, **characterized in that** the adaptation step comprises a negative feedback loop during which are implemented:
- a step of receiving action data from the driver of the motor vehicle;
- a step of comparing the actions with said at least one adapted personalization parameter calculated in the calculation step (13),
the command step (14) being based on said comparison carried out during the comparison step (16).

8. Device for automatically adapting at least one personalization parameter of a motor vehicle, such as a parameter for personalization of the engine, of the chassis, of the lighting and sound ambiance of the passenger compartment, of driver posture, said device comprising:
- means for geolocating said motor vehicle;
- means for positioning the motor vehicle on a road map on the basis of said geolocation;
- means for acquiring, in a database, at least one dynamic parameter of a plurality of other motor vehicles in the same position and/or in future positions of the motor vehicle on the road map;
- means for calculating a value representative of the type of driving of the user of the motor vehicle, such as a relative positive acceleration value over a predetermined period;
- means for defining a driving profile of the user based on said value representative of the type of driving of the user; and
- means for calculating said at least one personalization parameter adapted on the basis of said at least one acquired dynamic parameter; and
- means for commanding the application of the personalization parameter adapted to the motor vehicle;
the acquisition means being designed to acquire, in said database, at least one dynamic parameter of a plurality of other motor vehicles having the same value representative of the type of driving of the user of the motor vehicle, calculated for said motor vehicle and for the other vehicles, in the same position of the motor vehicle on the road map.

9. Motor vehicle comprising a device according to Claim 8.
